# EUROPEAN PATENT APPLICATION

(11) **EP 4 488 346 A1**
(43) Date of publication of application: **08.01.2025**
(21) Application number: 23183149.6
(22) Date of filing: 03.07.2023
(51) Int. Cl.: C10L 3/10

(54) **METHOD FOR UPGRADING BIOGAS AND SYNGAS**

(71) Applicant: Heidelberg Materials AG, 69120 Heidelberg (DE)
(72) Inventor: SKOCEK, Jan, 69120 Heidelberg (DE); ZAJAC, Maciej, 69120 Heidelberg (DE); DIENEMANN, Wolfgang, 69120 Heidelberg (DE)
(74) Representative: Zellentin & Partner mbB Patentanwälte

(57) **Abstract**

Method for upgrading biogas or syngas wherein a raw gas (1) comprising biogas or syngas or both is provided, a mineral material comprising carbonatable Ca and/or Mg phases (2) is provided, and the raw gas (1) is contacted with the mineral material comprising carbonatable Ca and/or Mg phases (2) in a reactor (3), wherein a contact time between the raw gas (1) and the mineral material (2) and a weight ratio of the raw gas (1) to the mineral material (2) are adjusted to provide an upgraded gas (4) with a carbon dioxide concentration reduced by a factor 2 with respect to the carbon dioxide concentration in the raw gas (1) and a carbonated mineral material (5).

## Description

The present invention relates to a method for upgrading biogas and syngas.

Biogas is produced by anaerobic digestion of organic substances, for example, manures, sewage sludge, household or industrial or agricultural waste, or energy crops. Different technologies are known, like one stage, two stage and dry digestion. Also, the size of the digestors can vary widely, from small scale ones located at individual farms to large scale industrial plants. The biogas produced mainly comprises methane and carbon dioxide. Typically, biogas contains from 50 to 75 Vol.-% methane (CH₄), from 25 to 50 Vol.-% carbon dioxide (CO₂), from 2 to 8 Vol.-% nitrogen (N₂), some oxygen and air as well as minor amounts of other impurities from the digestion like hydrogen sulfide (H₂S), hydrogen (H₂), volatile organic compounds (VOCs) other than methane, siloxanes etc.

Thus, for use as fuel and as feed for manufacturing other products like hydrogen, the biogas usually needs to be purified. Purifying typically covers cleaning, i.e., removal of unwanted or harmful impurities, and upgrading, i.e., concentration of methane by separating methane from carbon dioxide. Cleaned and upgraded biogas is often designated biomethane. There are many different biogas cleaning and upgrading technologies known and available on the market. Examples include amine scrubbing, pressure swing absorption, water scrubbing, organic physical scrubbing, cryogenic distillation, and membrane separation. Each technology has different demands and efficiency rates. A drawback of many of these technologies is the generation of waste products that lack a beneficial use necessitating their landfilling or regenerating procedures being energy or cost intensive or both for recycling them. Also, several are energy intensive of their own. Thus, the object of upgrading biogas is still not fully solved.

Similar issues arise in syngas production, e.g., syngas made by pyrolysis, where an increase of the concentrations of CO, hydrogen and other energy relevant components in the syngas and a decrease of CO₂ may be desired or needed. Likewise, in methane mining it could be necessary to remove CO₂ to upgrade methane for further use and distribution.

It was now surprisingly found that mineral carbonation can selectively remove CO₂ from biogas and syngas and thereby increase the concentration of energetically relevant components such as methane, CO, H₂, and others. Unwanted and often harmful impurities like SOₓ (abbreviation for SO₂, SO₃ and mixtures of SO₂ and SO₃) and other acidic components are advantageously removed at the same time, obviating the need to separately clean the gas of them.

Thus, the above-mentioned object is solved by a method for upgrading biogas or syngas, wherein a raw gas comprising biogas or syngas or both is provided, a mineral material comprising carbonatable Ca and/or Mg phases is provided, and the raw gas is contacted with the mineral material comprising carbonatable Ca and/or Mg phases in a reactor, wherein a contact time between the raw gas and the mineral material and a weight ratio of the raw gas to the mineral material are adjusted to provide an upgraded gas with a carbon dioxide concentration reduced by a factor of at least 2, preferably at least 5, and most preferred at least 10, with respect to the carbon dioxide concentration in the raw gas, and a carbonated mineral material. The mineral material may have a carbonation degree of at least 50 %, preferred at least 70 %, and most preferred at least 80 %, calculated as CaO+MgO bound as carbonate with respect to the total content of CaO+MgO.

The method according to the invention has several advantages over known upgrading technologies. It is able to upgrade the raw gas without any need for prior cleaning. Acidic impurities are simultaneously removed, obviating separate cleaning steps. Mineral carbonation can take place at ambient temperature and pressure, minimizing the energy demand. No heating/cooling and/or pressurizing is needed. This also reduces the demand on the device construction. The produced carbonated mineral material is a useful product in itself, i.e., it needs no regeneration nor is it a waste that must be landfilled. Depending on the mineral material used and the components in the raw gas the obtained carbonated mineral material is suitable for cropland fertilization, pH control of croplands, construction of roads, graveling, as cement or concrete component, etc. without or with only minor further processing.

According to the invention, biogas and/or syngas is upgraded with a concurrent production of a useful product. The obtained upgraded gas contains increased amounts of methane and/or other combustible components. The obtained carbonated mineral material can be used e.g., as fertilizer or pH control agent in agriculture or as aggregate or supplementary cementitious material (abbreviated SCM) in construction without or with only minor further processing.

In a first step of the method according to the invention, a raw gas is provided comprising biogas and/or syngas. Biogas designates a gas obtained by anaerobic digestion of organic material, either in a digester or in a landfill, preferably in a digester. Syngas means a gas comprising methane and carbon dioxide as well as typically also one or more of carbon monoxide, hydrogen, and other constituents. Syngas is usually obtained from processes such as pyrolysis, thermal processing of waste, especially bio-waste, ammonia production, methanol production, hydrocarbons processing, steam reforming, partial oxidation of hydrocarbons, and methane mining. The raw gas can consist of biogas or of syngas or it is a mixture of any amounts of them. Further, both the biogas and the syngas can be a mixture derived from several sources and/or from an intermediate storage fed by one production site. This provides a more constant raw gas composition which is advantageous when a specific composition of the upgraded gas is required.

The second step, taking place before, concurrently and/or after the first step, is providing a mineral material rich in carbonatable Ca and/or Mg phases. Rich in carbonatable Ca and/or Mg phases means that at least 12.5 wt.-% of the waste material calculated as oxides is CaO and/or MgO and at least 80 wt.-% of the CaO and MgO is in carbonatable phases before carbonation. Preferably, CaO and/or MgO constitute at least 20 wt.-%, more preferably at least 30 wt.-% and most preferred at least 50 wt.-% of the waste material. Preferably, at least 85 wt.-%, more preferred at least 90 wt.-% of the CaO and MgO are in carbonatable phases. Thus, while a part of the carbonatable CaO and MgO in the mineral material might be already carbonated before carbonation, at least 10 wt.-% of the material calculated as oxides is carbonatable but not yet carbonated CaO and/or MgO. It is noted that mineral material is not restricted to natural minerals, it designates any material with a minimum amount of 60 wt.-% inorganic phases, preferably at least 80 wt.-%, most preferred at least 90 wt.-%. Suitable mineral materials according to the invention are for example, but not limited to, hydrates like recycled concrete aggregates and recycled concrete fines (abbreviated RCA and RCF), fly ashes, bottom ashes, slags, quarry overburden, carbide lime, spent catalysts, slacked lime, and mixtures of two or more thereof.

One preferred mineral material is suitably treated demolished concrete. To provide this, after demolishing concrete building structures the coarse demolition waste is crushed and ground in a manner known as such to provide RCA and RCF. RCA comprise the coarse aggregate as well as small aggregate adhered together by the hardened paste and some small aggregate. RCF consist mostly of the ground binder paste. Usually, parts of the fine parts of the original aggregate are present. Usually, aggregate and non-concrete parts of the demolishing waste are separated from RCF by crushing, separation steps if needed (e.g., screening to separate coarse particles and extracting metal with a magnet) and grinding. It is useful to grind/crush the demolition waste in the presence of CO₂, e.g., as suggested in US 2015/0210594 A1, or in a gas atmosphere containing carbon dioxide, preferably enriched in carbon dioxide, to improve separation of the hardened paste from the aggregate. However, both the RCA and the RCF are suitable as mineral material according to the invention. Waste concrete generated e.g., during washing of concreting equipment, discarded concrete and cement can be used analogously to demolished concrete.

Another preferred material are ashes from biomass and other incineration processes. The fly ashes often contain free lime, which is carbonatable, as well as alkalis. The fly ashes can be used directly, or they are hydrated before their application to convert the free lime to calcium hydroxide. Fly ashes often already have a suitable fineness and can be used without further grinding. Still, grinding might be done to further accelerate the mineralization reaction or to improve the properties of the carbonated fly ashes for the given utilization purpose. The respective bottom ashes can also be used.

Further, slags can be used. Those, depending on their production method, often contain free lime and/or calcium silicates such as C₂S and/or calcium-rich reactive glasses or mixtures of these phases. These phases are carbonatable as they are or upon their hydration at ambient conditions (e.g., in a slurry) or hydrothermally in an autoclave with increased temperature and/or pressure. The particle size of slags and hydrated slags might necessitate a grinding. Suitable finenesses are D₉₀ ≤ 2 mm, preferably ≤ 500 µm, ideally D₉₀ 100 µm, for subsequent use as SCM or fertilizer. For use as aggregates, any size is fine, but large particles will only react on their surface and are less effective.

Also, natural minerals like olivines, e.g., from quarry overburden, are suitable as mineral material. Such minerals contain phases like free lime and/or calcium silicates and/or calcium-rich reactive glasses. These phases are carbonatable as obtained or after a hydration at ambient conditions or hydrothermally in an autoclave with increased temperature and/or pressure. Suitable particle size distributions have a D₉₀ ≤ 2 mm, preferably ≤ 500 µm, ideally D₉₀ ≤ 100 µm, for subsequent use as SCM or fertilizer. For use as aggregates, any size is fine, but large particles are less effective in upgrading, i.e., in binding CO₂.

It is also possible to use a mixture of two or more mineral materials. This may be advantageous to equalize the composition of the mineral material and therewith the upgrading efficiency and/or the product composition for a desired use of the carbonated mineral material.

The size of the mineral material is often non-critical, e.g., a use as aggregate allows a wide particle size range. There are also uses that do require a specific size, e.g., a use as supplementary cementitious material in cement or concrete. The use as aggregates allows rather coarse size ranges like from 1 to 50 mm or from 2 to 32 mm or from 4 to 16 mm. The use as SCM requires rather fine size ranges like from 1 to 500 µm or from 5 to 250 µm or from 10 to 100 µm. Herein, particle sizes are determined by sieving for materials with sizes of 1 or 2 mm and higher and with laser diffraction for materials with sizes below 1 or 2 mm. Particle size distributions of materials comprising particles with sizes below and above 1 or 2 mm are measured with the method suited best to the major part of the particles or split into two fractions by sieving at 1 or 2 millimeters and measuring each of the sub-fractions by the respective method. For example, aggregate is preferably measured by sieving, supplementary cementitious material is preferably measured by laser diffraction.

In the third step, the raw gas is contacted with the mineral material in a reactor. According to the invention, the conditions contact time between the raw gas and the mineral material as well as weight ratio of the raw gas to the mineral material are adjusted to provide an upgraded gas and a carbonated mineral material. The upgraded gas has a carbon dioxide concentration that is reduced by a factor of at least 2, preferably at least 5, and most preferred at least 10, with respect to the carbon dioxide concentration in the raw gas. The carbonated mineral material typically has a carbonation degree of at least 50 %, preferred at least 70 %, and most preferred at least 80 %, calculated as CaO+MgO bound as carbonate with respect to the total content of CaO+MgO in the mineral material.

Numerous proposals have been made for the carbonation of materials rich in carbonatable Ca and/or Mg phases like RCF, slags, ashes, etc. to produce supplementary cementitious materials and/or for mineral carbonation with the goal of storing carbon dioxide. Therefore, one of ordinary skill in the art can rely on a broad knowledge base to adjust the conditions depending on the reactivity of the mineral material and available device on the one hand and the intended use of both the upgraded gas and the carbonated mineral material on the other hand. Also, temperature, water concentration, etc. play a role and are taken into account. Generally, longer contact times provide a higher carbonation degree of the carbonated mineral material corresponding to a lower CO₂ concentration in the upgraded gas. A lower ratio between raw gas and mineral material results in lower amounts of carbon dioxide in the upgraded gas and lower carbonation degree of the carbonated mineral material. Devices with intensive mixing of raw gas and mineral material decrease CO₂ concentration and increase carbonation degree or alternatively allow shorter contact times and/or higher ratios of raw gas to mineral material. Typically, there is an optimum water concentration, too. Carbonation needs water for dissolution of Ca²⁺ and/or Mg²⁺ ions or ions containing them from the mineral material and of CO₂ to enable a formation of carbonates and/or hydrogen carbonates that subsequently precipitate. Several suitable devices and usual conditions used therein are described in the following to illustrate what is possible but other devices and conditions are likewise suitable.

In one embodiment, a wet carbonation in a wet scrubber as reactor is applied. As described in https://en.wikipedia.org/wiki/Wet_scrubber, the term wet scrubber describes a variety of devices that normally remove pollutants from a furnace flue gas or from other gas streams. In a wet scrubber, the raw gas stream is brought into contact with the mineral material in the form of a scrubbing liquid, i.e., a solution or suspension of the mineral material. Contacting occurs by spraying the raw gas with the liquid, by forcing the raw gas through a pool of liquid, or by some other contact method, so as to remove the CO₂ from the raw gas. Wet scrubbers also remove dust particles by capturing them in liquid droplets. The droplets are then collected. Any droplets or liquid that are in the scrubber inlet gas must be separated from the outlet gas stream by means of another device referred to as a mist eliminator or entrainment separator (these terms are interchangeable). The collected liquid can be discharged or recirculated into the plant. Wet scrubbers that remove gaseous pollutants are also referred to as absorbers. Good gas-to-liquid contact is needed to obtain high removal efficiencies. Various wet scrubber designs are in use, wherein packed tower and plate tower are the most common ones. Wet scrubbers can achieve high removal efficiencies for either particles or gases and, in some instances, can achieve a high removal efficiency for both in the same system. For the present invention, from 2 to 15 kg mineral material per m³ of gas are typically used. The temperature usually ranges from 0 to 100 °C, preferably from ambient temperature (usually from 5 to 40 °C, more often from 15 to 35 °C, mostly from 20 to 30 °C) to 60 °C. Pressure is preferably atmospheric. A wet scrubber operates with a water-saturated atmosphere, i.e., a relative humidity of 100 %. The liquid phase is typically recirculated. Specific conditions depend on and will be adapted to the CO₂ concentration and carbonation potential of the mineral material. A series of scrubbers or a recirculation of the raw gas can enhance the upgrading efficiency.

Another embodiment uses a so-called dry scrubber as described in https://www.sciencedirect.com/topics/engineering/dry-scrubber as reactor. Specifically, according to https://en.wikipedia.org/wiki/Scrubber, a dry or semi-dry scrubbing system, unlike the wet scrubber, does not saturate the gas stream that is being treated with moisture. In some cases, no moisture is added, while in others only the amount of moisture that can be evaporated in the gas without condensing is added. Therefore, dry scrubbers generally do not have a stack steam plume or wastewater handling/disposal requirements. There are a number of dry type scrubbing system designs. However, all consist of two main sections or devices: a device to introduce the sorbent material, here the mineral material to be carbonated, into the gas stream, and a particulate matter control device to remove reaction products, excess sorbent material as well as any particulate matter already in the raw gas. Using this kind of device in upgrading the raw gas according to the invention is useful e.g., when the carbonatable material has a high fineness and/or reactivity so that e.g., an existing gas filtering system could be used as a reactor, or if a dry carbonated material after gas upgrading is required for further use to avoid a drying step after the carbonation step.

In a preferred embodiment, a so-called semi-dry scrubber is used as the reactor. Therein the mineral material rich in carbonatable Ca and/or Mg phases is provided, injected into the raw gas stream for reaction with the contained CO₂ at a relative humidity of 50 to 100 Vol.-% and a temperature from 20 to 130 °C in an amount of mineral material ranging from 5 to 30 kg/m³, a partly carbonated mineral material and upgraded gas are withdrawn, and a part of the partly carbonated mineral material is recycled into the scrubber while the remainder is discharged. Further details are described in EP 3 750 619 A1, the disclosure of which is herewith incorporated herein in its entirety.

Still another embodiment uses a combination of grinding the mineral material and carbonating it in a device combining a mill and a fluidized bed reactor as reactor. This approach is especially advantageous for manufacturing a carbonated mineral material suitable as supplementary cementitious material from a coarser mineral material. Typically, it comprises: grinding the mineral material in a mill at a temperature from 1 to 10 °C above the water dew point in the presence of the gas withdrawn from the mill - optionally with additional raw gas added to it or only raw gas added to it when the gas from the mill is sufficiently upgraded -, circulating the ground and partially carbonated mineral material in a fluidized bed reactor in contact with the gas, and withdrawing the upgraded gas and the carbonated mineral material from the fluidized bed reactor. Further details are found in EP 3 744 700 A1, the disclosure of which is herewith incorporated herein in its entirety.

The carbonation in a mill is also useful as such, without a fluidized bed reactor to increase the carbonation degree of the mineral material and/or amount of CO₂ removed from the gas. Furthermore, a fluidized bed reactor is useful as a reactor without recirculation to a mill. Typically, when a mill is used without coupled fluidized bed reactor a residence time of 1 - 120 minutes, preferably 2 - 60 minutes, ideally 4 - 30 minutes, wherein a size reduction of the mineral material particles to a D₉₀ < 1000 µm, or < 500 µm, or < 250 µm, is desired. The dew point temperature is adjusted to range from 0 to 30 °C, preferably from 1 to 10 °C, above the water dew point by water spraying and/or moisturizing the mineral material. After the grinding, the moisture of the carbonated material is preferably below 15 wt.-%, more preferred below 10 wt.-%, and ideally below 5 wt.-%, determined by heating to constant mass at 105 °C. The mill might be equipped with a separator to recirculate the coarser material. However, typically a single pass is sufficient and most effective. Alternatively, the complete residence time needed might be realized via fluidization of the preferably fine mineral material using a fluidized bed reactor. The same conditions as described above for the mill apply, of course, without any particle size reduction. The same gas stream as used for the milling, i.e., raw gas or a mixture of raw gas and recirculated gas might be used for fluidization. While circulation of the mineral material is technically feasible, a single passage in the reactor is normally sufficient and most effective. Gas partial recirculation is beneficial as it enables achieving a higher degree of CO₂ removal and hence gas upgrading as well as better control of relative humidity and moisture of the gas and carbonated mineral material, respectively.

Further useful processes and devices for contacting the raw gas with the mineral material and appropriate conditions are found, e.g., in EP 3 724 147 A1, EP 3 656 750 A1, EP 3 778 525 A1, EP 3 808 713 A1, EP 4 119 518 A1, EP 4 059 905 A1, EP 4 124 609 A1, and not prior published EP22166347.9, all of which are incorporated herein by reference in their entirety, and the prior art cited therein. Although those proposals focus on the manufacturing of supplementary cementitious materials/composite cements and/or sequestration of CO₂, the same devices and conditions are suitable for upgrading biogas and/or syngas according to the invention and the carbonated mineral material obtained is also useful for other applications. For such other uses, the particles of the mineral material can normally be coarser and preferably often are coarser. Although that slows down reaction rate, it reduces effort for providing the mineral material and the carbonated mineral material may be better adapted to the intended use.

A high carbonation degree is always desirable with a view to CO₂ storage. The higher the carbonation degree, the lower the carbon dioxide footprint of the upgraded gas and carbonated mineral material. Herein, carbonation degree designates the weight ratio (CaO + MgO in carbonates) / (CaO + MgO total). For some uses of the carbonated mineral material a high carbonation degree is also needed for a proper behavior in the desired use. For example, using the product as supplementary cementitious material needs a carbonation degree that ensures sufficient reactivity as pozzolan and a low enough surface for adequate workability of the paste upon mixing with water. Thus, a carbonation degree of at least 50 %, preferably at least 70 %, most preferred at least 80 %, is adjusted when the carbonated mineral material, especially carbonated recycled concrete fines, shall be used as supplementary cementitious material. For slags, olivines, etc., which are reactive without carbonation, a carbonation degree of at least 30 % suffices. For other uses like as aggregate or for graveling, a carbonation degree of a few percent like 5 % or 10 % or 20 % suffices. The degree will be determined by economics/efficiency or to maximize carbon dioxide storage or to control the pH of the carbonated material. After carbonation, the pH of the aggregates will be low enough to comply with regulations. A use for crop fertilizing or pH control of cropland also allows lower carbonation degrees like 5 % or 15 % or 30 %, wherein some residual alkalinity might by beneficial for e.g., acid soils neutralization.

The most interesting uses are as SCM in composite binders (CO₂ effect and replacing an energetically intensive and expensive product) and as fertilizer (CO₂ effect and replacing an energetically intensive and expensive product). The use as aggregate with lowered pH and densified surface due to carbonation improves the technical and environmental properties. In another embodiment, the upgrading of the raw gas is combined with an energetical use of the upgraded gas and the carbon dioxide in the exhaust gas from the energetical use is additionally fed into the raw gas upgrading to sequester the contained carbon dioxide. Suitable energetical uses are heat and electricity production from biomass or biogas or bio waste. Therein, the ashes from the biomass can be used as a part of the mineral material.

The invention will be illustrated further with reference to the attached figures, without restricting the scope to the specific embodiments shown. The invention includes all combinations of described and especially of preferred features that do not exclude each other. If not otherwise specified, any amount in % or parts is by weight and in the case of doubt referring to the total weight of the composition/mixture concerned. Thus, for the avoidance of doubt, relative humidity (RH) is expressed in Vol.-%, although it is generally assumed that % means Vol.-% when speaking about RH. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

In the figures,
figure 1 illustrates the principle of the approach of the present invention,
figure 2 illustrates an embodiment with a wet scrubber as reactor,
figure 3 illustrates another embodiment with a wet scrubber as reactor, and
figure 4 illustrates an embodiment with a packed bed reactor.

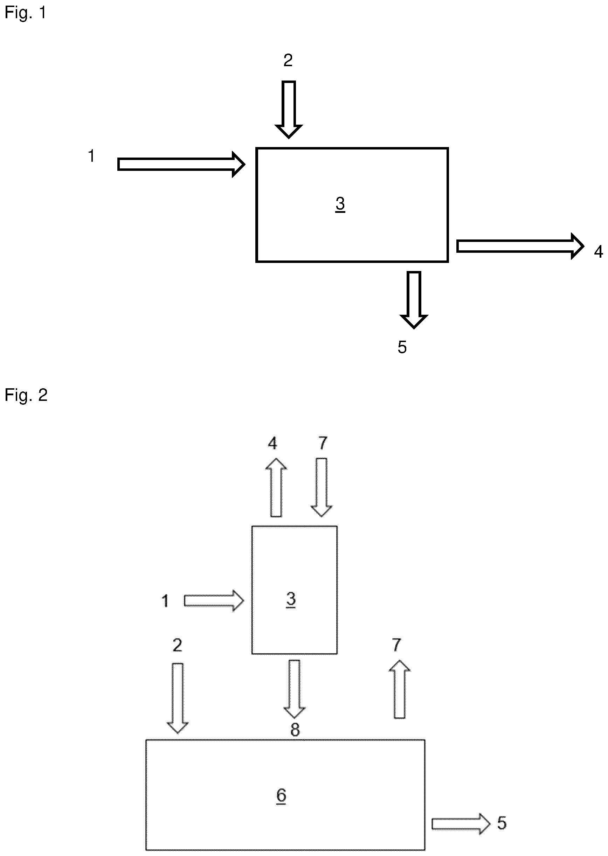

In figure 1, the principle of the method according to the invention is illustrated. First a raw gas 1 and a mineral material rich in carbonatable Ca and/or Mg phases 2 are provided. Both are fed into a reactor 3, e.g., a ball mill, where they contact each other so that carbon dioxide contained in the raw gas 1 reacts with the carbonatable Ca and/or Mg phases contained in the mineral material 2. Thereby, carbon dioxide is removed from the raw gas 1 providing the upgraded gas 4 and the mineral material 2 is carbonated providing the carbonated mineral material 5. Upgraded gas 4 and carbonated mineral material 5 are withdrawn or discharged from the reactor 3.

Figure 2 shows an embodiment wherein the reactor 3 is a wet scrubber. This variant is suitable for both fine and coarse materials rich in carbonatable CaO and/or MgO phases 2. The reactor 3 receives the raw gas 1 and upgraded gas 4 is discharged. The material rich in carbonatable CaO and/or MgO phases 2 is fed into a hold-up tank 6, which also receives spent slurry 8 from reactor 3. Tank 6 has a water supply not shown, which serves to add fresh water when needed to keep the desired concentration of materials rich in carbonatable CaO and/or MgO phases 2 in the slurry. The carbonation of the material rich in carbonatable CaO and/or MgO phases 2 is completed in tank 6 while carbon dioxide is extracted from the spent slurry 8 providing a recovered scrubbing slurry 7. The recovered scrubbing slurry 7 is recycled into reactor 3, where it is contacted with the raw gas 1. When needed, a water discharge can be foreseen at tank 6, but usually water is taken out together with the carbonated mineral material 5.

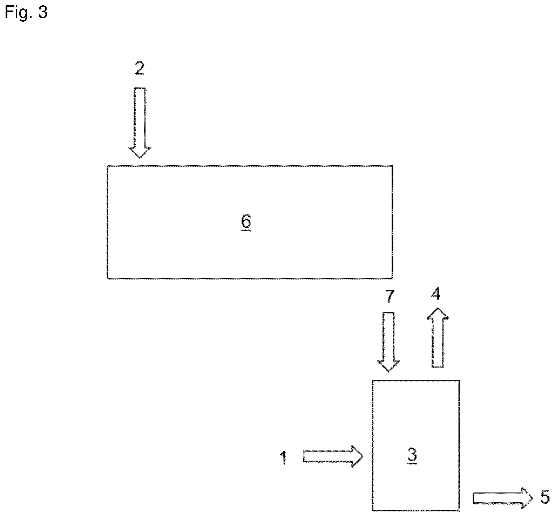

The embodiment in figure 3 is another variant of a wet scrubber as reactor 3, which is especially suitable for fine material rich in carbonatable CaO and/or MgO phases 2. Here, a make-up tank 6 is provided to mix the material rich in carbonatable CaO and/or MgO phases 2 with water (water supply not shown) and the resulting scrubbing slurry 7 is fed to reactor 3. As in the previous embodiment, raw gas 1 is fed to reactor 3 and contacted with scrubbing slurry 7 therein. The upgraded gas 4 and carbonated mineral material 5 are taken out. No recirculation of the scrubbing slurry is foreseen, because fine materials rich in carbonatable CaO and/or MgO phases 2 are able to carbonate fast enough to make that superfluous.

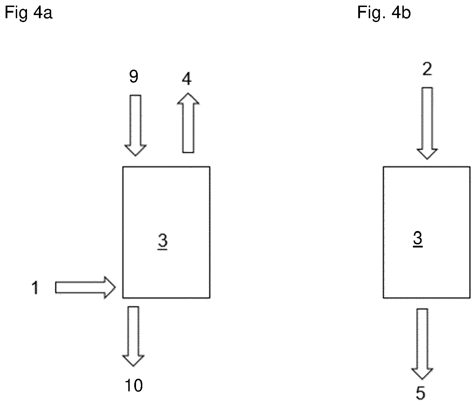

Figure 4 illustrates a packed bed reactor 3 operating in batch mode. In figure 4a, the reactor 3 receives raw gas 1 and upgraded gas 4 is discharged. Water 9 can be supplied to the reactor 3 when needed to achieve saturation of material surfaces and to compensate for drying by the removal of upgraded gas 4. Water 10 can be discharged to compensate for water formed during carbonation. In figure 4b, the discharge of carbonated mineral material 5 and refilling with material rich in carbonatable CaO and/or MgO phases 2 is depicted. Once the exchange of the packed bed is completed, purifying as shown in figure 4a starts again.

### List of reference numbers

- 1: raw gas
- 2: mineral material rich in carbonatable Ca and/or Mg phases
- 3: reactor
- 4: upgraded gas
- 5: carbonated mineral material
- 6: hold-up tank, make-up tank
- 7: scrubbing slurry
- 8: spent slurry
- 9: supplied water
- 10: discharged water

## Claims

1. Method for upgrading biogas or syngas, wherein a raw gas comprising biogas or syngas or both is provided, a mineral material comprising carbonatable Ca and/or Mg phases is provided, and the raw gas is contacted with the mineral material comprising carbonatable Ca and/or Mg phases in a reactor, wherein a contact time between the raw gas and the mineral material and a weight ratio of the raw gas to the mineral material are adjusted to provide an upgraded gas with a carbon dioxide concentration reduced by a factor of at least 2 with respect to the carbon dioxide concentration in the raw gas and a carbonated mineral material.

2. Method according to claim 1, wherein the raw gas is a biogas, obtained by anaerobic digestion of organic material, and/or a syngas, obtained from pyrolysis, thermal processing of waste, ammonia production, methanol production, hydrocarbons processing, steam reforming, partial oxidation of hydrocarbons, methane mining or two or more thereof.

3. Method according to claim 1 or 2, wherein the mineral material is selected from recycled concrete fines, recycled concrete aggregates, fly ash, bottom ash, slag, quarry overburden, carbide lime, spent catalyst, slacked lime, and mixture of two or more thereof.

4. Method according to one of claims 1 to 3, wherein the carbon dioxide concentration in the upgraded gas is reduced by a factor of at least 5, preferably of at least 10, with respect to the carbon dioxide concentration in the raw gas.

5. Method according to one of claims 1 to 4, wherein the carbonation degree of the carbonated mineral material is at least 1 % or at least 5 % or at least 10 % or at least 20 % or at least 30 % or at least 50 % or at least 70 % or at least 80 %.

6. Method according to one of claims 1 to 5, wherein the mineral material is provided with a particle size distribution having a D₉₀ ≤ 2 mm, preferably ≤ 500 µm, more preferred ≤ 100 µm.

7. Method according to one of claims 1 to 6, wherein the reactor is a wet scrubber and carbonation takes place at a relative humidity of 100 Vol.-% and/or at a temperature in the range from 0 °C to 100 °C, preferably from ambient temperature or 40 °C to 60 °C, and/or at ambient pressure and/or with 2 to 15 kg of mineral material per m³ of gas and/or with recirculation of the mineral material.

8. Method according to one of claims 1 to 6, wherein the reactor is a semi-dry scrubber at a relative humidity from 50 to 100 Vol.-% and/or at a temperature in the range from 20 to 130 °C and/or with an amount of mineral material ranging from 5 to 30 kg per m³ of gas.

9. Method according to one of claims 1 to 6, wherein the reactor is a dry scrubber.

10. Method according to one of claims 1 to 6, wherein the reactor is a fluidized bed reactor or a mill, wherein preferably a temperature from 1 to 10 °C above the water dew point is adjusted in the fluidized bed reactor or mill, respectively, by water spraying and or moisturizing the mineral material and a residence time is set to range from 1 to 120 minutes.

11. Method according to one of claims 1 to 6, wherein the reactor is a combination of mill and fluidized bed reactor and the mineral material is ground in the mill at a temperature from 1 to 10 °C above the water dew point in the presence of the raw gas, a ground and partially carbonated mineral material is circulated in a fluidized bed reactor in contact with the gas withdrawn from the mill optionally with added raw gas or in contact with added raw gas, and the upgraded gas and carbonated mineral material are withdrawn from the fluidized bed reactor.

12. Method according to one of claims 1 to 11, wherein the carbonated mineral material is mixed with a hydraulic cement for use of the carbonated mineral material as supplementary cementitious material.

13. Method according to one of claims 1 to 11, wherein the carbonated mineral material is used as aggregate in hydraulic building materials like concrete, mortar, or road binder or as gravel substitute for road and path construction.

14. Method according to one of claims 1 to 11, wherein the carbonated mineral material is applied onto agricultural or horticultural cropland or in gardens for use as fertilizer or for the adjustment of the pH of cropland.
